# EUROPEAN PATENT APPLICATION

(11) **EP 3 470 480 A1**
(43) Date of publication of application: **17.04.2019**
(21) Application number: 17812333.7
(22) Date of filing: 14.06.2017
(51) Int. Cl.: C09D 101/18, C09D 5/03, C09D 11/10

(54) **PROCESS FOR OBTAINING NITROCELLULOSE WITH INCORPORATED BINDERS, NITROCELLULOSE WITH INCORPORATED BINDERS, AND THE USE THEREOF**

(30) Priority: 14.06.2016 BR 102016013774
(71) Applicant: Companhia Nitro Química Brasileira, 08090-000 São Paulo - SP (BR)
(72) Inventor: FIDALE, Ludmila De Carvalho, 01410-000 São Paulo (BR); SILVA, Reginaldo Faichel Da, 03385-090 São Paulo (BA); TORRES, Oscimar, 03405-040 São Paulo (BR); GALGANO, Paula Decot, 05350-000 São Paulo (BR); FERREIRA, Fernando Antonio Cardoso, 01410-000 São Paulo (BR)
(74) Representative: Hoffmann Eitle
(86) International application number: PCT/BR2017/050152
(87) International publication number: WO 2017/214694

(57) **Abstract**

The aim of this invention is to provide a nitrocellulose with incorporated binders, said binders being plasticizers or resins in the form of granules (NPG/NRG), optionally with the addition of pigments (NPPG), with diameters between 0.4 and 2.0 mm, that present uniform particle size and low water content for use in ink, varnish and sealant compositions for the fields of: nail varnishes, automotive respraying, graphic printing on flexible films such as flexography, rotogravure and laminating (such as for example, BOPP, metalized BOPP, PE and PET, inter alia), wood surfaces, paper, glass, plastics, leather, metal mechanics and textiles, among other uses.

## Description

### Field of the Invention

This invention relates to the development of a nitrocellulose with incorporated binders, with the said binders being plasticizers or resins with low water content, alcohol-free, in the form of granules (NPG / NRG) containing an antioxidant stabilizer. This invention further relates to nitrocellulose with incorporated binders and with added pigments (NPPG).

According to this invention, a process is described for obtaining the said NPG/NRG/NPPG through the incorporation of an aqueous emulsion containing binders, with the said binders being plasticizers or resins, nitrocellulose fiber in the presence of surfactants, and the addition of antioxidant compounds that minimize the development of color in the nitrocellulose, and optionally pigments, followed by centrifuging and drying the finished product.

The product thus obtained has a low water content and uniform particle size, endowing the formulations in which it is used with greater stability for color development and the formation of high-gloss films, together with greater coloring power when additional pigments are used. Applications for NPG/NRG/NPPG in the form of granules the use thereof in compositions for inks, varnishes and sealants for the fields of: nail varnishes, automotive respraying, graphic printing on flexible films such as flexography, rotogravure and laminating (such as for example, BOPP, metalized BOPP, PE and PET, inter alia), wood surfaces, paper, glass, plastics, leather, metal mechanics and textiles, cosmetics, pharmaceuticals and medicine, among other uses. Due to the very low water content achieved in the finished product, the product resulting from this invention provides a nitrocellulose for use in new systems or segments, such as the composition of coating formulations catalyzed by isocyanates in various groups, allowing the formation of urethane bonds and conferring high-performance qualities on the film to which they are applied. From the environmental standpoint, this invention also innovates through its application in mono-solvent inking systems that are used in industrial processes or structures that recover organic solvents resulting from the evaporation of inks and the formation of the coating film, thus reducing azeotropy in the distillation process.

### Background of the invention

Nitrocellulose is a toxic, biodegradable resin drawn from a renewable source that thus presents an ecologically friendly aspect. Initially, the use of nitrocellulose was limited to the weapons and explosives field (military grade). However, as the years went by, nitrocellulose use extended to lacquers in the inks and varnishes industry, and latex in the adhesives field (lacquer grade).

Other than the form in which it is sold, the difference between military grade and lacquer grade nitrocellulose lies in the nitrogen content of the molecule. Lacquer grade nitrocellulose has a nitrogen content of 10.7% to 12.5% and is classified as a raw material for the inks and varnishes industry. With a nitrogen content of 12.5% to 13.6%, military-grade nitrocellulose is used in warfare or for civilian purposes as a rocket propellant and in single and double based gunpowder. This application is characterized by higher explosivity, due to the larger number of nitrate groups in the molecule.

In addition to its use for producing varnishes and sealants, lacquer grade nitrocellulose may also be used as a film-forming resin for the production of nail varnishes, inks for printing on flexible films and automotive respraying. Some characteristic properties of this resin, such as fast drying, high gloss, pigment wetting, applied surface spreadability and compatibility with other resins are crucial for its use in the segments.

In its dry form, this product is a fine, light particle that explodes easily when in contact with any ignition source or at temperatures higher than 180°C. A major concern for this sector has always been avoiding its ignition or self-ignition, thus ensuring that it is safe to handle.

Today, commercial lacquer grade nitrocellulose is available as gun cotton, moistened with alcohols or water, with a water content that may reach 5%, endowing the product with stability and turning it into a solid that is inflammable but not explosive. This wetting process ensures safe for use and storage of nitrocellulose products by the industry.

In addition to being sold in a format that is moistened with alcohols or water, nitrocellulose may also be plasticized into what are commonly called "chips". However, in this "chip" form, nitrocellulose dissolves slowly in an organic solvent, as the "chips" are compact and hard-surfaced, hampering penetration by solvents. Furthermore, the "chips" have the heterogeneous size of the granules, which also makes them harder to dissolve and may result in clumping. This slow dissolving process results in the need to use high temperatures and shearing, which affects the production of ink and varnish.

In commercial terms, what has been disclosed about the use of nitrocellulose free from wetting agents such as alcohols and water in the form of granules, is that it is solely for use as raw material when manufacturing military grade propellants. In this process, nitrocellulose is used with nitrogen content levels in the range of 12.5% to 14.0%, and a small proportion of nitrocellulose with nitrogen content levels in the range of 10.6 to 12.4%, partially dissolved with organic solvents in order to obtain a gel-like mixture. The product is then dried in heated rotating vacuum drums.

It is also known in the state of the art that nitrocellulose and solutions thereof in organic solvents develop coloring over time, taking on a yellowish tinge.

Among the chemical processes that may intervene in the chemical degradation of nitrocellulose molecules (Formula 1), oxidation is one of the most common types. This decomposition process (Formula 2) takes place in two steps. The initial phase is relatively slow and is attributed to the instability of the ester groups in this naturally-sourced polymer.

During the second phase, the decomposition products generated during the initial phase react with the nitrocellulose and the reaction becomes self-catalytic, consequently speeding up the decomposition process significantly. The dissociation of the ester group of the nitrocellulose is assumed to be due mainly to ruptures in the O-NO₂ bonds, with the formation of NO₂ groups and, subsequently, easy conversion to radicals NO.

If the decomposition products generated during the initial step are removed as quickly as possible, the second phase reactions will be inhibited, and decomposition will not occur.

It is noted that aldehydes and acetones are also obtained through degradation, formed from the shear-off of the O-NO₂ groups as the sequence of nitrocellulose decomposition, preferably for carbon atoms 2 and 3.

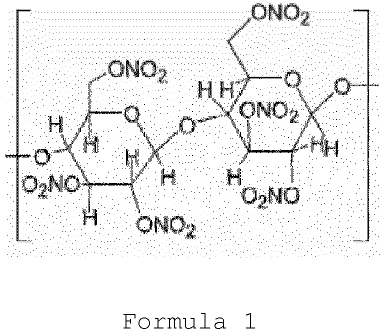

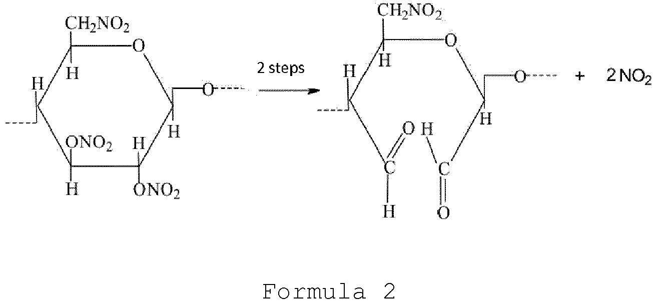

Under suitable temperature and moisture conditions, in an extremely acid medium under ultraviolet radiation, nitrocellulose decomposition may occur in the carbon 6, thus forming formaldehyde; it may also occur simultaneously with the decomposition mechanism - shown in the following diagram (Formula 3) :

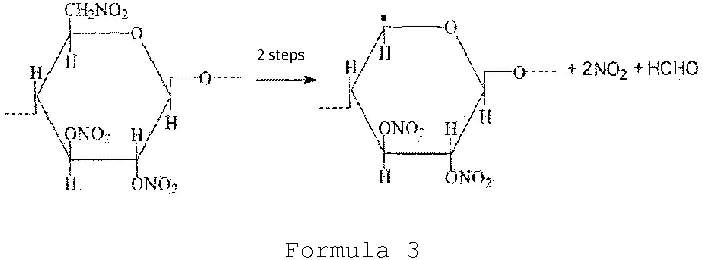

Colors in the substances are invariably explained as a result of the presence of a chromophore - a chemical group with the capacity to absorb and that is responsible for the color (Formula 4). Its structure must contain systems with dislocated electrons. They are responsible for absorbing electromagnetic radiation, with the wavelength depending on electron cloud energy. The chromophores do not make the substances colored, but endowed them with the ability to absorb radiation. If a molecule absorbs on the visible scale, it will have a color complementary to that which is absorbed. Thus, if the compound absorbs violet, it looks yellow.

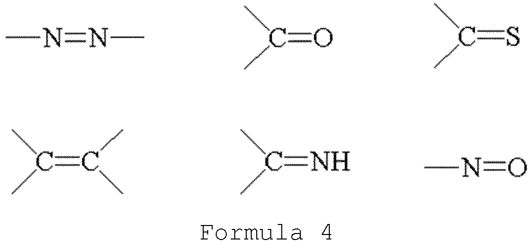

The main chromophore group in nitrocellulose is the nitro group (Formula 5). This chromophore is a nitrogen linked to two oxygen atoms, with these two oxygen atoms linked to the nitrogen with bonds of equal intensity, with the electrons dislocated among the three atoms. The presence of double bonds makes this chromophore more intense, due to the conjugation with an extra pair of electrons. The classic route for obtaining chromophores in the nitro grouping involves condensing an aldol catalyzed by a nitroalkane base that has an alpha hydrogen in terms of the aldehyde or ketone carbonyl group. This reaction provides the β-nitro alcohols that, through dehydration, result in nitroalkanes that are yellowish in color, which may be more or less intense, depending on the neighboring groups.

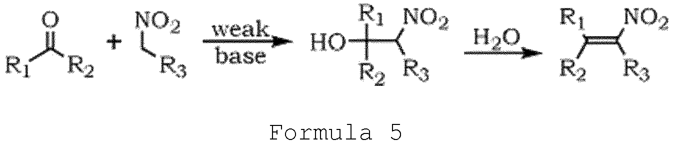

Another issue that arises with regard to nitrocellulose is its water content. A high water content in some compositions may lead to instabilities in the formulations, such as nail varnishes, for example, causing a phenomenon known as syneresis. This is directly related to disturbances in molecule associations, causing instability through rearranging the polar and nonpolar interactions of the compounds in the formulation, leading to water being repelled from the surrounding medium, thus separating the components in the formulation into layers, which causes rejection by consumers.

With regard to pigments, which are the substances that give color to the inks, and are generally sold in solid, dry form, it is known that the state of the art that they are not primary particles, rather clumps or "lumps", leaving free space between pigment particles. These individual pigment particles touch each other only on corners and edges. Although interactive forces are relatively minor among the particles, these forces may be created through traditional dispersal units. For pigment dispersal, the pigment clumps are broken up through shearing forces and impacts, which ideally result in primary particles. During this process, energy is supplied to the inks system, whereby the clumps are fragmented into smaller particles, interfacing more effectively with the resin. The system then strives to get away from this energized state, returning to its previous low-energy status: the well-distributed pigments cluster into larger structures known as flocculates. This is reflected in lower coloring power, for example, as well as less gloss and altered rheology. In structural terms, the flocculates are very similar to the clumps; however, the interstices between the pigment particles are packed with resin solution rather than air, filling up space that was previously empty and enhancing the coverage power of an ink.

As described in detail above, proper pigment dispersal is an important and vital step for the performance of good-quality inks.

Nitrocellulose plays a crucial role in this process, as one of its outstanding application properties is its ability to disperse organic and inorganic pigments, together with mineral loads. As a polymer with a high molecular weight, nitrocellulose interacts on the surfaces of dispersed pigment particles, hampering the formation of larger structures known as flocculates.

Pigment dispersal in the printing inks field, for example, is handled through ball mills. A suspension is prepared, using a solution of nitrocellulose in ethyl acetate and dry powdered pigment prepared in a Cowles mixer. This suspension is transferred to a ball mill containing zirconium balls, beginning to circulate through the grinding chamber. The shearing effect caused by the zirconium balls on the clumped pigment particles results in the dispersal or "declumping" of the pigment, while the nitrocellulose fills the empty spaces between the solid particles, interacting on their surfaces. This phenomenon helps stabilize the dispersal, resulting in an ink with better coverage. However, this production process requires specific pigment dispersal equipment and also involves energy consumption and processing time, together with constraints imposed by equipment or setup outlays between matches in different colors.

Constituting the state of the art, document US 6896752 describes a process for producing compacted free-flowing nitrocellulose wherein this process involves pressing a nitrocellulose based lacquer feed material and optionally comprises shearing off the compacted lacquer raw material into pieces of selected length. However, The moisture content of the compacted nitrocellulose is at least 25%.

Thus, there is clearly a need for the development of a process for obtaining nitrocellulose with incorporated binders, with the said binders being plasticizers or resins in which the obtained particles are homogenous in size and shape, being characterized as granules, with low water content, the absence of organic solvents, dissolving easily in solvents and less natural color development (yellowing) of the nitrocellulose, and may also include the addition of pigments.

### Summary of the Invention

The aim of this invention is to provide a nitrocellulose with incorporated binders, with the said binders being plasticizers or resins in the form of granules (NPG/NRG), optionally with the addition of pigments (NPPG), with diameters between 0.4 and 2.0 mm, with uniform particle size and low water content for use in ink, varnish and sealant compositions for the fields of: nail varnishes, automotive respraying, graphic printing on flexible films such as flexography, rotogravure and laminating (such as for example, BOPP, metalized BOPP, PE and PET, inter alia), wood surfaces, paper, glass, plastics, leather, metal mechanics and textiles, among other uses.

In one of the embodiments of this invention, a process is defined for obtaining nitrocellulose with incorporated binders, with the said binders being plasticizers or resins in the form of granules. And in yet another embodiment of the invention, the process comprises a step with the addition of pigments.

Another embodiment of the invention refers to nitrocellulose with incorporated binders and optionally with the addition of pigments, with the said binders being plasticizers or resins in the form of granules opting through the said process and characterized in that the particle size varies between approximately 0.4 mm and 2.0 mm.

Another embodiment of the invention involves the use of nitrocellulose with incorporated binders and optionally with the addition of pigments, with the said binders being plasticizers or resins in the form of granules obtained through the said process in sundry applications, such as for example, compositions for inks, varnishes and sealants for the fields of: nail varnishes, automotive respraying, graphic printing on flexible films such as flexography, rotogravure and laminating (such as for example, BOPP, metalized BOPP, PE and PET, inter alia), wood surfaces, paper, glass, plastics, leather, metal mechanics and textiles, among others.

### Brief Description of the Drawings

Figure 1 - presents a graph showing the granule size distribution for the three types of nitrocellulose with incorporated binders - plasticizer - shaped.
Figure 2 - presents a graph showing the granule size distribution for nitrocellulose with incorporated binders - resins - shaped.
Figure 3 - presents images of the nitrocellulose sample with incorporated binders - plasticizer - obtained at natural size (a) and a microscope image showing a 30-fold enlargement in the sample size (b) and allows the identification of plasticizer crystals (here, acetyl tributyl citrate - ATBC).
Figure 4 - presents images of the nitrocellulose sample with incorporated binders - resin - obtained at natural size (a) and a microscope image showing a 50-fold enlargement in the sample size (b) and allows the identification of resin crystals (here, polyester).

### Detailed Description of the Invention

The purpose of this invention is to present a process for obtaining nitrocellulose with incorporated binders, with the said binders being plasticizers or resins in the form of granules (NPG/NRG), with low water content and small and homogeneous particle size with antioxidant stabilizers in order to endow them with improved characteristics for the application thereof, such as easy dissolution, enhanced gloss, opportunities for new applications requiring the absence of free hydroxyls (deriving from alcohol or water) and the absence the appearance of color (yellowing).

In this invention, the word "binders" refers to the plasticizers and resins that are incorporated into the nitrocellulose, as described in detail below.

In this invention, the word "pigments" refers to these substances that give color to the inks, generally being clumped or clustered in a manner whereby there is free space among the pigment particles.

In a surprising manner, the inventors ascertained that the use of antioxidant compounds found in the composition of the surfactant, or added to the composition of the finished product, prevent the appearance of unwanted color for NPG/NRG/NPPG in the form of granules.

The yellowing of the nitrocellulose is blamed on the instability of the ester groups in this polymer through rupturing the O-NO₂ bonds and the formation of NO₂ groups that are subsequently converted easily into NO radicals, making the reaction self-catalytic and consequently speeding up the decomposition process and generating chromophore compounds in the nitro group. If the decomposition products are removed at this phase as quickly as possible, these reactions are inhibited and the decomposition does not occur.

According to this invention, the use of antioxidants minimizes the progression of the yellow coloring of the NPG/NRG in the form of granules. The basic principle behind the action of the stabilizing and antioxidant compounds is due to the fact that the hydrogen atom is easily substituted. This high reactivity thus endows these compounds with the ability to react rapidly with the nitrous groups and also during the reaction with the NOx groups that are released by the nitrocellulose chain throughout its degradation.

Still according to this invention, the granulated appearance of the finished product and its homogeneity, with granule size in the range of approximately 0.4 to 2.0 mm, is possible through tight control over the emulsion in process of the plasticizer and a surfactant suitable for the system to be emulsion, in order to foster the formation of geometric micelles that are chemically stable and small in size, during this emulsioning step. The controlled process variables that influence the above-mentioned characteristics are: water in which the raw materials are added; temperature; stirring in a blender and above all the stirring speed.

Using fluidized bed technology, the drying process results in a finished product with low water content and homogenous grains.

Fluidized bed technology is known at the state of the art. However, the inventors introduced improvements to parts of the dryer, which were developed specifically to achieve the outcomes resulting from this invention. The fluidization chamber body was constructed as a single-stage vertical cone in stainless steel supported by a galvanized carbon steel structure.

In the inner portion of the fluidization chamber, an impeller associated with a sprayer was developed, in a geometrical spiral shape spaced isometrically along a horizontal axis. These sprayers were developed with specific diameters, suitable for drying the nitrocellulose with incorporated binders, with the said binders being plasticizers or resins in the form of granules, being the main factors that suspend and move the material evenly during the drying process in order to separate out the fibers during the drying process, ensuring that the hot air flow performs a more efficient heat exchange, removing the water from the material with greater efficiency. The system driving the spray shaft is powered by a digital motor controlled by a frequency inverter in order to allow alterations to the substrate fluidization speed. As developed, the parameters of this set of instruments are linked to temperature control, air inflow speed, and the flow rate of the material to be dried. The process variables are dependent on the type of nitrocellulose, plasticizer or resin; the surfactant used and the processing, as described in detail in the following examples.

The appearance of the finished product, meaning the nitrocellulose with incorporated binders, with the said binders being plasticizers or resins in the form of granules, is thus obtained through chemical interactions between the surfactant and the resin or plasticizer; followed by separation from the nitrocellulose fiber, optionally with the addition of pigments, and the appropriate homogenization thereof, which then allows the removal of excess water through a specific drying process in order to reach water content levels of less than 1%, and preferably water content levels of up to 0.2%. Furthermore, the NPG/NRG/NPPG obtained is presented in granule sizes that are controlled and homogeneous, without clumping and fully dispersed, easy to store, transport and handle, dissolving rapidly and not classified as an explosive solid, with a complete absence of volatile organic solvents.

The process addressed by this invention may be described through the steps of obtaining a water-based emulsion with at least one surfactant, which might or might not contain an antioxidant stabilizer agent and at least one plasticizer or at least one resin or a blend of resins, optionally with the addition of pigment, adding at least one type of nitrocellulose, homogenization of the system obtained after separating out at least one type of nitrocellulose, centrifuging the obtained suspension and drying it to obtain NPG/NRG in the form of granules. Should the surfactant agent use not contain an antioxidant stabilizer agent, a stabilizer agent and a thermal, chemical antioxidant may be used, or may be found in the ultraviolet protection classes.

The NPG/NRG/NPPG addressed by this invention is obtained through emulsioning plasticizers, defined from the group that consists of: stearic acid, acrylates, adipates, azelates, benzoates, phthalates, fumarates, glycols, glutarates, maleates, sebacates, succinates, phthalates, trimethylates and others. Preferably, the plasticizer is defined from the group consisting of acetyl tributyl citrate (ATBC), epoxydized soybean oil (ESO), tris(nonylphenyl)phosphite, dibutyl phthalate (DBP) and 2,6-bis(1,1-dimethylethyl)-4-methyl phenol.

The NPG/NRG/NPPG addressed in this invention may also be prepared through using resin or a blend of liquid or solid resins, emulsioned in water or not, defined from the group that consists of: acrylic resin or polyacrylates either pure or styrene, hydroxylated acrylic resin, urethane acrylic resin, acrylic resin with phenol groups; ketone resin; maleic resin; fumaric resin; epoxy resin; silicone resin; saturated and unsaturated polyester resin, hydroxylated polyester resin, acrylated polyester resin; alkyd resin hydroxylated or not, urethane alkyd resin, alkyd resin with phenol groups, acrylate alkyd resin, styrene alkyd resin; polyurethane resin derived from aromatic, aliphatic or aliphatic cycle groups; pitch resin and derivatives thereof, and others.

The process addressed by this invention uses surfactants defined from the group that consists of: non-ionic, anionic and cationic surfactants or mixtures thereof, such as for example, sulphonated fatty acids, sulphonated polyesters, sulphonated naphthalenes, complex phosphate esters, ethoxylated or not, carboxylic esters, ethoxylated or not, ethoxylated nonyl and octyl phenol esters, ethoxylated alcohol esters or derivatives thereof, aliphatic or aromatic quaternary ammonium salts, ethoxylated aliphatic or cyclic amines, and phospholipids, among others. But the surfactants are preferably defined from the group consisting mainly of phosphate groups an act as an antioxidant carrier, or even more preferably polyoxyethylene tridecyl ether phosphate, ethoxylated nonylphenol and alkyl aryl polyglycol ether sulphate sodium salt.

In addition to the phosphate surfactants mentioned above, the process addressed by this invention the following may also be used as thermal or chemical stabilizing and antioxidant agents or from the ultraviolet protection classes, defined from the group that consists of: phenolic, benzoic and ascorbic types of organic acids, and others, organic with phosphorus groupings or aromatics such as benzene, toluene or aliphatics.

The inventors surprisingly ascertained that the use of phosphorus-based or phosphate surfactants also acted in an antioxidant manner on the nitrocellulose in the finished product, minimizing the appearance of color, due to the reactive lists of these antioxidant compounds with byproducts deriving from the degradation of the nitrocellulose, specifically nitro group chromophores, thus ensuring slower development of a yellowish color in solutions containing nitrocellulose.

The emulsion produced so far is incorporated into the main nitrocellulose raw material, which may be: nitrocellulose moistened with water, ethyl alcohol, isopropyl alcohol or terc-butylic alcohol, with a low level of nitration (BN)- between 10.4% and 11.8% of nitrogen - or also known as soluble alcohol (SA); and also high nitration (HN) nitrocellulose with between 11.8% and 12.5% of nitrogen, known as ester-soluble (ES) nitrocelluloses. The Nitrocellulose to be incorporated may be of one type (SA or ES), or a mixture of them. But the nitrocelluloses used in this invention may preferably be defined from the group consisting of the following DIN (ABNT) Standard Classifications: 4E, 5E, 6E, 7E, 8E, 9E, 10E, 11E, 12E, 13E, 14E, 15E, 16E, 17E, 18E, 19E, 20E, 21E, 22E, 23E, 24E, 25E, 26E, 27E, 28E, 29E, 30E, 31E, 32E, 33E, 34E, 35E, 36E, 37E; and A8, A9, A10, A11, A12, A13, A14, A15, A16, A17, A18, A19, A20, A21, A22, A23, A24, A25, A26, A27, A28, A29, A30, A31 and A32.

After the separation of the nitrocellulose, the entire system is carefully homogenized while being stirred with a disperser for a period varying between approximately 10 minutes and 40 minutes, at a temperature varying between approximately 5°C and 50°C, at a speed varying between approximately 100 rpm and 4000 rpm.

Excess water in the product obtained through this step is removed from the process defined as follows: centrifuging, ultracentrifugation, filtering, or ultrafiltering.

In order to remove all the residual water and configure the physical appearance of the finished product, the material is dried through a drying process - contact dryer - defined from the group that consists of: vibrating or fixed tray, vibrating, fixed or rotating belt, direct or indirect horizontal rotation, with or without stirring, fixed or rotating drum, among others. Or otherwise through the drying process - convection dryer - defined from the group that consists of: fluidized bed, perforated belt, rotating or fixed tray, pneumatic rotating cascade dryer, spray-dryer and lyophilization, among others.

More preferably, the used dryer is the fluidized bed dryer, wherein the body of the fluidization chamber is in the shape of a single-stage vertical stainless steel cone supported by a galvanized carbon steel structure, containing an impeller associated with a sprayer in a geometrical spiral shape, spaced asymmetrically along a horizontal shaft where the sprayers are arrayed with specific diameters.

The process addressed by this invention comprises the following NPG/NRG production steps:
a) adding a quantity of between approximately 400 kg and 750 kg of demineralized water to a reactor vessel;
b) switching on the stirrer at a speed varying between approximately 200 rpm and 500 rpm;
c) adding at least one surfactant in a quantity varying between approximately 0.930 kg and 1.050 kg;
d) increasing the stirring rate and continuing for a period of between approximately 5 minutes and 10 minutes;
e) heating the reactor vessel up to a temperature varying between approximately 30°C and 35°C, adding at least one binder, with the said binder being a plasticizer or a resin in a quantity varying between approximately 43.58 kg and 120 kg at a flow rate varying between approximately 40 l/h and 50 l/h;
f) increasing the stirring rate again and continue for approximately 10 minutes to 30 minutes;
g) adding only once at least one type of nitrocellulose with approximately 65% to 70% solids, moistened with water, in a quantity varying between approximately 260 kg and 500 kg;
h) increasing the stirring;
i) adding a quantity of water varying between approximately 180 kg and 400 kg and adjusting the stirring to between approximately 2,500 rpm and 3,000 rpm for a period of time varying between approximately 30 minutes and 40 minutes at a temperature varying between approximately 30°C and 35°C;
j) discharging the suspension formed in step (i) into a centrifuge and centrifuging it for approximately 20 minutes to 30 minutes;
k) transferring the product obtained in step (j) to a dryer (P1) at a flow rate varying between 185 kg/h and 250 kg/h, with an air flow rate varying between approximately 8,200 m³/h and 8,630 m³/h;
l) running the dry product through a discharge cyclone (P2);
m) transferring the product by a cooled screw conveyor.

In another embodiment, the process addressed by this invention comprises the following NPPG production steps:
a) adding a quantity of between approximately 100 kg and 750 kg of demineralized water to a reactor vessel;
b) switching on the stirrer at a speed varying between approximately 200 rpm and 1,100 rpm;
c) adding at least one surfactant in a quantity varying between approximately 0.600 kg and 1.050 kg;
d) increasing the stirring rate and continuing for a period of between approximately 5 minutes and 15 minutes;
e) heating the reactor vessel up to a temperature varying between approximately 30°C and 45°C, adding at least one binder, with the said binder being a plasticizer or a resin in a quantity varying between approximately 41.00 kg and 120 kg at a flow rate varying between approximately 40 l/h and 50 l/h;
f) increasing the stirring rate again and continue for approximately 10 minutes to 30 minutes;
g) slowly and continuously adding a quantity of pigment varying between about 100 g to 200 g of pigment, and increase the stirring speed to 1,500 rpm, continuing to stir for approximately 30 minutes.
h) adding only once at least one type of nitrocellulose with approximately 65% to 70% solids, moistened with water, in a quantity varying between approximately 180 kg and 500 kg;
i) increasing the stirring;
j) adding a quantity of a dispersing and wetting agent in a quantity varying between about 1.00 kg and 2.00 kg and adjusting the stirring to between approximately 2,500 rpm and 3,200 rpm for a period of time varying between approximately 30 minutes and 45 minutes at a temperature varying between approximately 30°C and 35°C;
k) discharging the suspension formed in step (j) into a centrifuge and centrifuging it for approximately 20 minutes to 30 minutes;
l) transferring the product obtained in step (k) to a dryer (P1) at a flow rate varying between 120 kg/h and 250 kg/h, with an air flow rate varying between approximately 6,300 m³/h and 8,630 m³/h;
m) running the dry product through a discharge cyclone (P2);
n) transferring the product by a cooled screw conveyor.

### Drying Process

The fluidized chamber of the dryer offers the advantage of running on residual heat energy (boiler flue gases), with a heat exchanger, gas flare, electric coil and others.

A flow diffuser with tightly controlled temperature and air flow rate handles the movement and heating of the material in the dryer, keeping it in suspension while ensuring a steady flow and a controlled movement route. This enhances the efficiency of evaporating the water in the material while separating the fibers in order to avoid clumps, as it is pulverized in the fluidized bed chamber.

When the material obtained through the process addressed by this invention reaches the desired moisture content, ascertained through an internal infrared analytical analyzer, the pneumatic transport system extracts it through ducts carrying it to a cyclone that separates the dry material from the drying gases.

After drying, the gases are sent to a filter system, depending on the product to be dried and the heat source used in the process, such as for example: sleeve filter, cartridge filter and gas scrubber, among others.

Together with the geometrical shape of the air diffuser (impeller), the inflow and outflow systems were developed with specific configurations for drying nitrocellulose with incorporated binders, with the said binders being plasticizers or resins, in order to obtain a finished product with controlled and homogeneous particle sizes and a very low water content, ensuring that all the drying steps are integrated with the process. According to the present invention, the drying process takes place in a fluidized bed dryer wherein the body of the fluidization chamber is in the shape of a single-stage vertical stainless steel cone supported by a galvanized carbon steel structure, containing an impeller associated with a sprayer in a geometrical spiral shape, spaced asymmetrically along a horizontal shaft where the sprayers are arrayed with specific diameters.

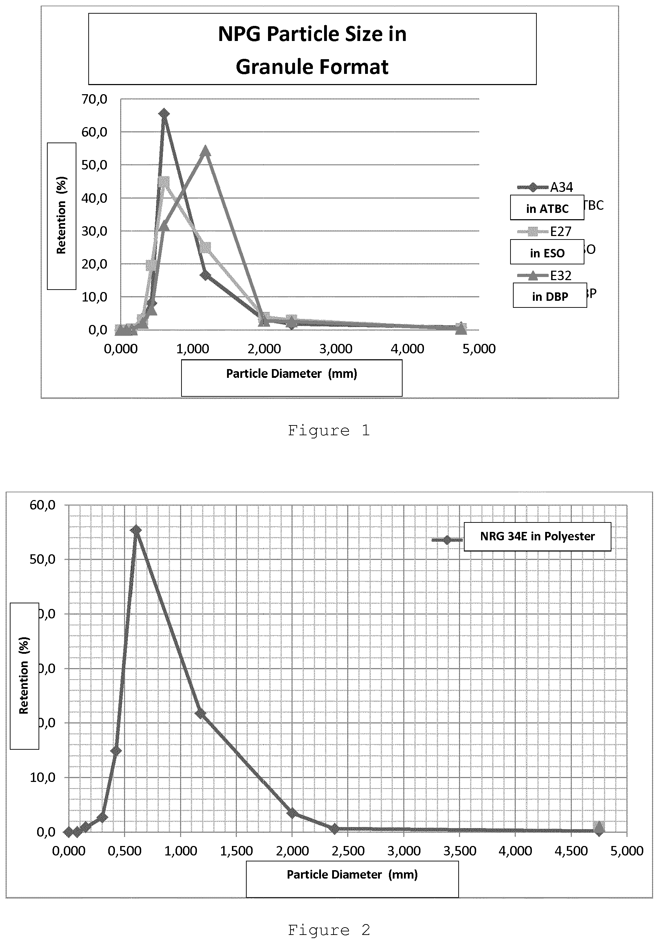

Figure 1 shows a graph with the size distribution of the granules obtained for three types of nitrocellulose (A34, E27 and E32) through the process addressed by this invention, where it may be seen that the largest granules size distribution varies between approximately 0.6 mm and 1.2 mm.

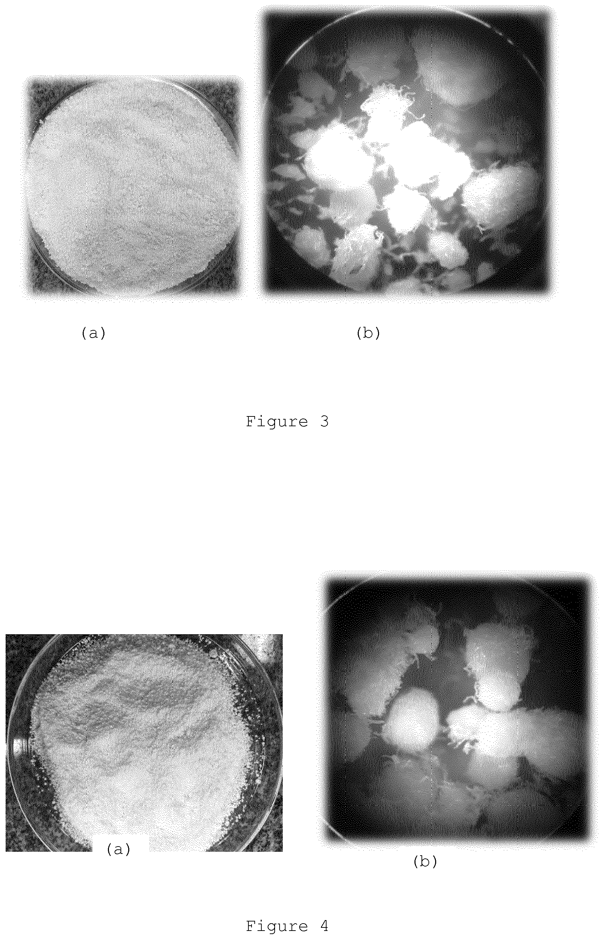

Figure 2 (a) shows the finished product (NPG), while Figure 3 (b) shows a microscope image (enlarged 30-fold) where the crystals may be identified of the plasticizer used (ATBC) in the process described herein.

Figure 3 shows a graph with the size distribution of the granules obtained for type 34E nitrocellulose through the process addressed by this invention. It may be seen that the largest granules size distribution varies between approximately 0.4 and 2.0 mm.

Figure 4 (a) shows the finished product (NRG), while Figure 4 (b) shows the resulting granule, enlarged 50-fold in a microscope image.

### Examples

The following examples will illustrate this invention better, while the particular conditions and parameters described constitute preferred but not limiting embodiments of this invention.

### Example 1: Process of obtaining NPG/NRG in the form of granules

### Example 1 (a):

In a reactor vessel, add 400 kg of demineralized water, switch on the stirrer with the disperser, and a speed of 500 rpm, adding 1.050 kg of polyoxyethylene tridecyl ether phosphate surfactant, increasing the stirring rate and continuing for 5 minutes. Then heat the reactor vessel to a temperature of 35°C, adding 43.58 kg of acetyl tributyl citrate (ATBC) plasticizer at a flow rate of 50 l/h and increase the stirring speed to 800 rpm. Then add only once 260 kg of type A34 nitrocellulose with 65% solids moistened with water, increase the stirring rate to 2,500 rpm, and add 180 kg of water, adjusting the stirring to 3000 rpm and maintaining the temperature at 35°C. The suspension formed through to this step is discharged into a centrifuge. The nitrocellulose cake is centrifuged for 20 minutes, and the product is then discharged and transferred to the hopper feeding the fluidized bed dryer. The feed screw conveyor is then switched on at a flow rate of 250 kg/h, the inflow blower fan is switched on and the airflow rate is adjusted to 8,200 m³/h. The air runs through a heat exchanger and the temperature is adjusted to 140°C. The dried product runs to the discharge cyclone and is transferred by a cooled screw conveyor. The product then drops on to a vibrating jig screen and is packaged.

### Example 1 (b):

In a reactor vessel, add 750 kg of demineralized water, switch on the stirrer with a disperser at a speed of 200 rpm. Then add 0.930 kg of ethoxylated nonylphenol with 10 mols ethylene oxide, increasing the stirring rate and continuing for 10 minutes. Heat the reactor vessel to a temperature of 30°C, adding 90.25 kg of plasticizer epoxydized soybean oil (ESO) at a flow rate of 50 l/h and increase the stirring speed to 900 rpm. Then add 0.103 kg of tris(nonylphenyl)phosphite, and continue stirring. Once the emulsion is finished, load only once 500 kg of type E27 nitrocellulose, with 70% solids moistened with water, increase the stirring rate to 2,500 rpm, and add 400 kg of water. Then adjust the stirring to 3,000 rpm and maintain the temperature at 30°C. The suspension formed up to this step is discharged into a centrifuge. The nitrocellulose cake is then centrifuged for 30 minutes. The resulting product is discharged and transferred to the hopper feeding the fluidized bed dryer. The feed screw conveyor is then switched on at a flow rate of 185 kg/h, the inflow blower fan is also switched on and the airflow rate is adjusted to 8,550 m³/h. The air runs through a heat exchanger and the temperature is adjusted to 128°C. The dried product runs through the discharge cyclone and is transferred by a cooled screw conveyor. The product then drops on to a vibrating jig screen and is packaged.

### Example 1 (c):

In a reactor vessel, add 450 kg of demineralized water, switch on the stirrer with the disperser at a speed of 300 rpm, and add 0.945 kg of alkyl aryl polyglycol ether sulphate sodium salt surfactant. Increase the stirring rate and continue for 10 minutes. Then heat the reactor vessel to a temperature of 35°C and add 51.85 kg of dibutyl phthalate (DBP) plasticizer. Increase the stirring speed and continue for 30 minutes. Then add 0.175 kg of 2,6-bis(1,1-dimethylethyl)-4-methyl phenol and continue stirring for 30 minutes. Once the emulsion is finished, load only once 300 kg of type E32 nitrocellulose, with 67% solids moistened with water, increase the stirring rate to 2,000 rpm, and add 180 kg of water, adjusting the stirring to 2,500 rpm and maintaining the temperature at 35°C. The suspension formed up to this step is discharged into a centrifuge. The nitrocellulose cake is then centrifuged for 20 minutes. The product is discharged and transferred to the hopper feeding the fluidized bed dryer, the feed screw conveyor is then switched on at a flow rate of 355 kg/h, the inflow blower fan is switched on and the airflow rate is adjusted to 8,630 m³/h. The air runs through a heat exchanger and the temperature is adjusted to 140°C. The dried product runs to the discharge cyclone and is transferred by a cooled screw conveyor. The product then drops on to a vibrating jig screen and is packaged.

### Example 1 (d) :

In a reactor vessel (Reactor A), add 300 kg of saturated hydroxylated polyester resin. Heat the polyester gently while stirring at 100 rpm up to temperature of 80°C. Drip in 2.7 kg of polyoxyethylene tridecyl ether phosphate surfactant and continue stirring for 30 minutes. Slowly add 315 kg of water to the reactor, stirred at 400 rpm, in a stirrer. Then cool the polyester emulsion to a temperature of 40°C.

In another reaction vessel (Reactor B), add 1,100 kg of water and 0.2 kg of polyoxyethylene tridecyl ether phosphate surfactant. Weigh 200 kg of type 34E nitrocellulose with 70% solids moistened with water and transferred to Reactor B, continuing to stir at 700 rpm for 30 minutes. With the stirrer still switched on, add 120 kg of the polyester emulsion prepared in the reactor to the nitrocellulose suspension in Reactor B and continue stirring at 900 rpm for 60 minutes.

The suspension formed up to this step is discharged into a centrifuge. The product is then centrifuged for 20 minutes and is then discharged and transferred to the hopper feeding the fluidized bed dryer. The feed screw conveyor is then switched on at a flow rate of 180 kg/h, the inflow blower fan is switched on and the airflow rate is adjusted to 9,570 m³/h. The air runs through a heat exchanger and the temperature is adjusted to 147°C. The dried product runs to the discharge cyclone and is transferred by a cooled screw conveyor. The product then drops on to a vibrating jig screen and is packaged.

### Example 2: Process of obtaining NPPG in the form of granules

In a reactor vessel, add 105 kg of demineralized water, switch on the stirrer with the disperser, and a speed of 1100 rpm, adding 0.45 kg of polyoxyethylene tridecyl ether phosphate surfactant and 0.17 kg of alkyl aryl polyglycol ether sulphate sodium salt surfactant. Increase the stirring rate and continue for 15 minutes. Then heat the reactor vessel to a temperature of 45°C, adding 41.2 kg of acetyl tributyl citrate (ATBC) plasticizer at a flow rate of 40 l/h and increase the stirring speed to 1,500 rpm. Then slowly and steadily add 176.3 g of Yellow 13 pigment and increase the stirring speed to 1,500 rpm and continue for 30 minutes. Next, add only once 190.5 kg of type 34E nitrocellulose with 65% solids moistened with water, increase the stirring rate to 2,500 rpm, and continue for 30 minutes. Then add 0.55 kg of the dispersant and wetting agent (EMULCRYL D - Clariant). Increase the speed by 100 rpm every 10 minutes, until reaching 3,200 rpm and continue for 45 minutes, maintaining the temperature at 35°C.

The concentrated suspension formed up to this step is then discharged and transferred to the screw conveyor feeding the fluidized bed dryer. The feed screw conveyor is then switched on at a flow rate of 125 kg/h, the inflow blower fan is switched on and the airflow rate is adjusted to 6,300 m³/h. The air runs through a heat exchanger and the temperature is adjusted to 72°C. The dried product runs to the discharge cyclone and is transferred by a cooled screw conveyor. The product then drops on to a vibrating jig screen and is packaged.

### Example 3: Discussion of the Results

### Water Content

The water content levels were determined through a Methrom Potentiometric Titrator, using a platinum electrode and a Karl Fischer solution as a titration agent, with a sample dissolved in methyl alcohol. The water content measurements proved the efficiency of the water extraction process, presenting water content levels below 0.2% for all examples of nitrocellulose with incorporated binders, with the said binders being plasticizers or resins in the form of granules. This value is significantly lower compared to nitrocellulose in the form of grains and chips, as shown in Table 1. These water levels allow the use of nitrocellulose in new systems or segments, such as the composition of formulations for coatings catalyzed by isocyanates in various groups for example, allowing the formation of urethane bonds and conferring high-performance qualities on the film to which they are applied. From the environmental standpoint, this invention also innovates through its application in monosolvent inking systems, which are used in industrial processes or structures that recover organic solvents resulting from the evaporation of inks and the formation of the coating film, thus reducing azeotropy in the distillation process. Another aspect that is no less important is the formation of high-gloss films due to the absence of water in formulations for sundry segments, in addition to versatility in the choice of solvents for specific formulations.

### Measurement of Color Development

in order to prove the efficiency of the innovation in terms of adding antioxidant compounds to nitrocellulose with incorporated binders, with the said binders being plasticizers or resins in the form of granules, in either the phosphate groups in surfactants or through adding other groups, as an agent able to slow the yellowing of the nitrocellulose, the samples were dissolved in ethyl acetate solvent in order to obtain a solution with 15% solids. This solution was transferred to 10 cm quartz bottles with Teflon-coated caps that were taken to the digester block for one hour at a temperature of 95°C. These time and temperature conditions lead to the degradation of the nitrocellulose at a kinetic speed equivalent to leaving the nitrocellulose at room temperature for six months. After an hour, the solution is cooled and analyzed in a Gardner color meter on the Hazen scale. All types of nitrocellulose with incorporated binders, with the said binders being plasticizers or resins in the form of granules as set forth in the examples resulting from this invention, present significant reductions in the Hazen color variation, proving the efficacy of the antioxidant agents that trap the radicals formed during nitrocellulose decomposition, with these radicals producing the chromophore groups causing the yellowish coloring of the nitrocellulose. Formulations with light-colored nitrocellulose resin are extremely important for use in segments where low color ratings and stability are important aspects that are appreciated. Among nitrocellulose applications, the segments most in need of this property are nail varnishes, printing inks for flexible films used for rotogravure and flexography, as well as the automotive respraying segment. It may be noted that the highest color values were obtained from solutions prepared with "chips", suggesting that the nitrocellulose degradation process is catalyzed during the production process through shearing and temperature.

### Particle Size

Particle size analyses were conducted in order to assess the homogeneity of the granules obtained. A sample consisting of a mass of 100 grams was transferred to a set of screens with different-sized meshes arranged on top of each other, forming a sequence of decreasing mesh diameters. This set of screens was transferred to vibrating equipment for a period of 30 minutes. After this time, the matter on the screens was weighed, calculating the percentages trapped by each mesh. The article size graphs - Figures 1 and 2 - show granule size homogeneity for all types of nitrocelluloses shown in the examples illustrating this invention. Due to these particle sizes and their respective homogeneity, dissolving tests showed significant reductions in the length of time required for them to dissolve in organic solvents. This property helps boost the productivity of ink manufacturers.

### Efficiency of the Emulsification Process

In order to assess the efficiency of the process separating the plasticizer/resin in the nitrocellulose, the amount of wastewater was quantified, resulting from the emulsioning of the nitrocellulose. The highest concentration of plasticizer found in the wastewater was 0.027%, with a residual concentration of 0.016% for resin. This result compares the efficiency of all the emulsioning processes, as well as efficacy and the use of a suitable surfactant, producing nitrocellulose in the form of granules with a suitable concentration of plasticizer/resin. This characterization was performed through a Liquid Chromatograph with detector de Photodiode Array detector, 2996 model, using acetonitrile as a mobile phase at a flow of 1 mL/min, and a C18 column of 150 mm.

### Thermal Stability of nitrocellulose

Analyses of the ignition, stability and decomposition of the nitrocellulose with incorporated binders, with the said binders being plasticizers or resins in the form of granules, produced results in terms of the heat stability characteristics of nitrocellulose with incorporated binders, with the said binders being plasticizers or resins in the form of granules, that are related to safe handling of the product, in terms of explosivity. All the results are compliant with values established by regulatory agencies.

Table 1 below shows the results of the tests described above, conducted in order to compare the NPG/NRG in the form of granules obtained through the processes described in the examples of this invention, with nitrocellulose in the form of cotton and with the same nitrocellulose in the form of "chips", as known at the state of the art.

| Characterization | Unit | NC25 AS | 25AS Chip in ATBC | 25AS NPG in ATBC | NC 1/4 ES | Chip 1/4 ES in ESO | NPG 1/4 ES in ESO | NC 1/2 ES | Chip 1/2 ES in DBP | NPG 1/2 ES in DBP | NRg 34E in Polyester |
|---|---|---|---|---|---|---|---|---|---|---|---|
| Water | % | 2.10 | 0.95 | 0.15 | 1.97 | 1.07 | 0.17 | 2.15 | 0.99 | 0.19 | 0.11 |
| Acidity | Mg KOH/g sample | 0.97 | 1.32 | 0.81 | 0.84 | 99 | 0.76 | 0.79 | 0.92 | 0.66 | 0.94 |
| Density | g/cm³ | 0.41 0 | 0.631 | 0.422 | 0.371 | 0.612 | 0.298 | 0.358 | 0.604 | 0.342 | 0.487 |
| Stability | Minutes | 40 | 32 | 39 | 38 | 32 | 38 | 41 | 31 | 38 | 35 |
| Ignition | ºC | 185 | 182 | 184 | 183 | 181 | 185 | 185 | 180 | 185 | 186 |
| Decomposition | Mg NOx/g sample | 2.52 | 2.88 | 2.44 | 2.52 | 2.79 | 2.61 | 2.52 | 2.82 | 2.48 | 2.57 |
| Tubidity | nm | 74 | 76 | 53 | 81 | 85 | 62 | 89 | 91 | 54 | 61 |
| Hazen Color | Hazen | 71 | 85 | 74 | 84 | 95 | 88 | 66 | 79 | 69 | 62 |
| Accelerated Hazen Color (Solution with 20% solids in ethyl acetate for 1 hour at 95ºC) | Hazen | 132 | 157 | 88 | 148 | 179 | 108 | 157 | 184 | 97 | 89 |
| Variation | Hazen | 61 | 72 | 14 | 64 | 84 | 20 | 91 | 105 | 28 | 27 |
| Particle size | Not applicable | 10 to 20 minutes | 93.6% between 2.0 and 0.425 | Not applicable | Not applicable | 10 to 20 minutes | 93.2% between 2.0 and 0.426 | Not applicable | 10 to 20 minutes | 95.0% between 2.0 and 0.427 | 95.6% between 2.0 and 0.427 |
| Dissolution Time 1.25% solids 2. Ethyl Acetate solvent 3. Temperat ure: 25ºC 4. Cowles stirrer | Minutes | 25 | 105 | 27 | 32 | 115 | 30 | 35 | 132 | 36 | 32 |
| Quantification of plasticizer in centrifuge wastewater | % | Not applicable | Not applicable | 0.019 | Not applicable | Notapplicable | 0.027 | Not applicable | Not applicable | 0.025 | 0.016 |

### Pigment Dispersal Comparison: NPPG X Pigmented Chip X Pure Pigment

A pigment dispersal comparison was conducted, using: NPPG, Pigmented Chip and Pure Pigment.

The results presented below in Table 2 demonstrate the efficiency of pre-dispersal of the pigment in the NPPG, where the time required for it to dissolve was shorter than that needed for Pigmented Chips and Pure Pigment.

**Table 2:**

| **Dispersal of Yellow 13 Pigment in Cowles Disperser** | | | |
|---|---|---|---|
| | NPPG | Pigmented Chip | Pure Pigment |
| Dissection Time (min) | 35 min | 68 min | 120 min |
| Fineness - Hegman gauge | 9 | 8 | 4 |
| Hegman gauge fineness = the larger the better. Ideal >7 | | | |

| **Dispersal of Yellow 13 Pigment in Ball Mill** | | | |
|---|---|---|---|
| | NPPG | Pigmented Chip | Pure Pigment |
| Dissolution Time (min) | 12 min | 57 min | 120 min |
| Fineness - Hegman gauge | 9 | 9 | 7 |

Through an aqueous emulsion containing plasticizers or resins, the process described in this invention provides a surfactant, antioxidant compounds that are present in the surfactant composition or added to the composition of the finished product, optionally pigment, and a nitrocellulose, a final emulsion that is dried through a centrifuging and drying process, and finished product with a low water content and uniform particle size that dissolves easily, ensuring greater stability in color development for the formulations where it is used, such as compositions for inks, varnishes and sealants for the fields of: nail varnishes, automotive respraying, graphic printing on flexible films such as flexography, rotogravure and laminating (such as for example, BOPP, metalized BOPP, PE and PET, inter alia), wood surfaces, paper, glass, plastics, leather, metal mechanics and textiles, among others.

For NPPG, the process addressed by the invention also allows shorter ink manufacturing times through eliminating the pigment dispersal step, as a single product already contains: nitrocellulose, plasticizer and pigment.

## Claims

1. Process for obtaining nitrocellulose with incorporated binders, in the form of granules **characterized in that** it comprises the following steps:
a. obtaining a water-based emulsion with at least one surfactant that contains an antioxidant stabilizer agent and at least one binder;
b. adding at least one type of nitrocellulose;
c. homogenization of the obtained emulsion;
d. centrifuging the obtained suspension;
e. drying in order to obtain nitrocellulose with an incorporated binder, in the form of granules.

2. Process for obtaining nitrocellulose with incorporated binders, in the form of granules **characterized in that** it comprises the following steps:
a. obtaining a water-based emulsion with at least one surfactant and at least one binder;
b. adding at least one antioxidant stabilizer agent to the emulsion obtained in step (a);
c. adding at least one type of nitrocellulose;
d. homogenization of the obtained emulsion;
e. centrifuging the obtained suspension;
f. drying in order to obtain nitrocellulose with an incorporated binder, in the form of granules.

3. Process for obtaining nitrocellulose with incorporated binders, in the form of granules, **characterized in that** it comprises the following steps:
a) adding a quantity of between approximately 100 kg and 750 kg of demineralized water to a reactor vessel;
b) switching on the stirrer at a speed varying between approximately 200 rpm and 1,100 rpm;
c) adding at least one surfactant in a quantity varying between approximately 0.600 kg and 1,050 kg;
d) increasing the stirring rate and continuing for a period of between approximately 5 minutes and 15 minutes;
e) heating the reactor vessel up to a temperature varying between approximately 30°C and 45°C, adding at least one binder, with the said binder being a plasticizer or a resin in a quantity varying between approximately 41.00 kg and 120 kg at a flow rate varying between approximately 40 l/h and 50 l/h;
f) increasing the stirring rate again and continuing for approximately 10 minutes to 30 minutes;
g) slowly and continuously adding a quantity of pigment varying between about 100 g to 200 g of pigment, and increasing the stirring speed to 1,500 rpm, continuing to stir for approximately 30 minutes.
h) adding only once at least one type of nitrocellulose with approximately 65% to 70% solids, moistened with water, in a quantity varying between approximately 180 kg and 500 kg;
i) increasing the stirring;
j) adding a quantity of a dispersing and wetting agent in a quantity varying between about 1.00 kg and 2.00 kg and adjusting the stirring to between approximately 2,500 rpm and 3,200 rpm for a period of time varying between approximately 30 minutes and 45 minutes at a temperature varying between approximately 30°C and 35°C;
k) discharging the suspension formed in step (j) into a centrifuge and centrifuging it for approximately 20 minutes to 30 minutes;
l) transferring the product obtained in step (k) to a dryer (P1) at a flow rate varying between 120 kg/h and 250 kg/h, with an air flow rate varying between approximately 6,300 m³/h and 8,630 m³/h;
m) running the dry product through a discharge cyclone (P2) ;
n) transferring the product by a cooled screw conveyor.

4. Process according to Claim 1, 2 or 3, **characterized in that** the binder is a plasticizer.

5. Process according to Claim 1, 2 or 3, **characterized in that** the binder is a resin or a blend of resins.

6. Process according to Claim 4, **characterized in that** the plasticizer is defined from the group that consists of: stearic acid, acrylates, adipates, azelates, benzoates, phthalates, fumarates, glycols, glutarates, maleates, sebacates, succinates, phthalates, trimethylates and others. Preferably, the plasticizer is defined from the group consisting of acetyltributylcitrate (ATBC), epoxydized soybean oil (ESO), tris(nonylphenyl)phosphite, dibutyl phthalate (DBP) and 2,6-bis(1,1-dimethylethyl)-4-methyl phenol.

7. Process according to Claim 5, **characterized in that** the resin or a blend of resins is defined from the group that consists of: acrylic resin or pure or styrene polyacrylates, hydroxylated acrylic resin, urethane acrylic resin, acrylic resin with phenol groups; ketone resin; maleic resin; fumaric resin; epoxy resin; silicone resin; saturated and unsaturated polyester resin, hydroxylated polyester resin, acrylated polyester resin; alkyd resin hydroxylated or not, urethane alkyd resin, alkyd resin with phenol groups, acrylate alkyd resin, styrene alkyd resin; polyurethane resin derived from aromatic, aliphatic or aliphatic cycle groups; pitch resin and derivatives thereof.

8. Process according to any one of Claims 1 to 7 **characterized in that** the surfactant is defined from the group that consists of: sulphonated fatty acids, sulphonated polyesters, sulphonated naphthalenes, complex phosphate esters, ethoxylated or not, carboxylic esters, ethoxylated or not, ethoxylated nonyl and octyl phenol esters, ethoxylated alcohol esters or derivatives thereof, aliphatic or aromatic quaternary ammonium salts, ethoxylated aliphatic or cyclic amines, and phospholipids.

9. Process according to Claim 8, **characterized in that** the surfactant is preferably defined from the group consisting of: polyoxyethylene tridecyl ether phosphate, ethoxylated nonylphenol and alkyl aryl polyglycol ether sulphate sodium salt.

10. Process according to any one of Claims 2 to 9, **characterized in that** the antioxidant stabilizer agent is defined from the group that consists of phenolic, benzoic and ascorbic types of organic acids, and other organic acids with phosphorus groupings, aromatics such as benzene or toluene or aliphatics.

11. Process according to any one of Claims 1 to 10, **characterized in that** the nitrocellulose is defined from the group that consists of the following DIN (ABNT) Standard Classifications: 4E, 5E, 6E, 7E, 8E, 9E, 10E, 11E, 12E, 13E, 14E, 15E, 16E, 17E, 18E, 19E, 20E, 21E, 22E, 23E, 24E, 25E, 26E, 27E, 28E, 29E, 30E, 31E, 32E, 33E, 34E, 35E, 36E, 37E; and A8, A9, A10, A11, A12, A13, A14, A15, A16, A17, A18, A19, A20, A21, A22, A23, A24, A25, A26, A27, A28, A29, A30, A31 and A32.

12. Nitrocellulose with incorporated binders, in the form of granules **characterized in that** it is obtained through the process according to any one of Claims 1 to 11.

13. Nitrocellulose according to Claim 12 **characterized in that** the granules have a diameter varying between 0.4 mm and 2.0 mm.

14. Nitrocellulose according to any one of Claims 12 to 13, **characterized in that** it has a water content of less than 1%, and preferably a water content of up to 0.2%.

15. Use of the nitrocellulose according to any one of Claims 12 to 14, **characterized in that** it is for the composition of inks, varnishes and sealants for the fields of: nail varnishes, automotive respraying, graphic printing on flexible films such as flexography, rotogravure and laminating for BOPP, metalized BOPP, PE and PET, inter alia; wood surfaces, paper, glass, plastics, leather, metal mechanics and textiles, among other uses.
